# EUROPÄISCHE PATENTSCHRIFT

(11) **EP 1 855 827 B1**
(45) Veröffentlichungstag und Bekanntmachung des Hinweises auf die Patenterteilung: **11.07.2012**
(21) Anmeldenummer: 06704742.3
(22) Anmeldetag: 09.03.2006
(51) Int. Cl.: B23B 27/16, B23B 27/14

(54) **Wendeschneidplatte**
Indexable insert
Plaquette amovible

(30) Priorität: 11.03.2005 AT 1492005
(43) Veröffentlichungstag der Anmeldung: 21.11.2007
(73) Patentinhaber: Ceratizit Austria GmbH, 6600 Reutte (AT)
(72) Erfinder: ROFNER, Rudolf, A-6611 Heiterwang (AT); URSCHITZ, Harald, A-6600 Breitenwang (AT); VENTURINI, Remus, 87672 Rosshaupten (DE)
(86) Internationale Anmeldenummer: PCT/AT2006/000100
(87) Internationale Veröffentlichungsnummer: WO 2006/094326

(56) Entgegenhaltungen:
- EP-A- 0 494 646
- EP-A- 0 642 859
- DE-A1- 4 201 112
- US-A1- 2004 045 426

## Beschreibung

Die Erfindung betrifft eine polygonale Wendeschneidplatte gemäß dem Oberbegriff des Anspruchs 1 mit einer ebenen Auflagefläche und Schneidkanten an der Oberseite, welche durch zwei oder mehr Schneidecken mit aufeinander folgend abwechselnd spitzen und stumpfen Eckenwinkeln von weniger als 89° bzw. mehr als 91° miteinander verbunden sind, wobei die Schneidkanten gegenüber der ebenen Auflagefläche derart geradlinig oder kurvenförmig verlaufen, dass die Dicke d der Wendeschneidplatte in den Schneidecken mit spitzem Winkel größer ist als die Dicke d' in den Schneidecken mit stumpfem Winkel.

Eine derartige rhombus- oder rhomboidförmige Wendeschneidplatte ist in der EP 0 642 859 A beschrieben. Bei dieser Wendeschneidplatte gehen die Schneidkanten unmittelbar in eine, in Bezug auf die Auflagefläche zuerst abfallende und dann ansteigende Spanfläche über, welche mit einem zentralen Mittelbereich der Wendeschneidplatte eine wellenförmige Verschneidungskurve bildet. Der zentrale Mittelbereich ist dabei eben, parallel zur Auflagefläche ausgeführt und liegt insgesamt oberhalb des höchsten Punktes der Schneidkanten. Auf diese Weise ergibt sich insbesondere im Schneideckenbereich mit der geringeren Wendeschneidplattendicke eine stark ansteigende Spanleiststufe. Aufgrund dieser speziellen Spanleitstufengeometrie kommt es bei größeren Vorschüben bei der Zerspanung zu einer starken Verformung der Späne, was wiederum zu sehr hohen Schnittkräften führt, welche sich durch auftretende Schwingungen negativ auf die Oberflächengüte, Standzeit und Maßhaltigkeit auswirken. Aufgrund einer zu geringen Spankontrolle kommt es auch vermehrt zu Schneidkantenausbrüchen.

Die Aufgabe der vorliegenden Erfindung ist es daher eine Wendeschneidplatte der genannten Art zu schaffen, die auch bei großen Vorschüben eingesetzt werden kann, ohne dass es zu vorzeitigen Beschädigungen der Schneidkanten und zu verringerten Oberflächengüten kommt.

Erfindungsgemäß wird dies durch die Merkmale des Anspruchs 1 erreicht, wobei, in Draufsicht gesehen, die Schneidkanten in eine in Bezug auf die Auflagefläche zuerst abfallende und in weiterem Verlauf mit einem Rückenbereich ansteigende Spanfläche übergehen, welche dann mit einem Mittelteil der Wendeschneidplatte eine Verschneidungskurve bildet, welche in der Draufsicht derart verläuft, dass sie im Bereich der Schneidecken mit spitzem Winkel jeweils in ihrem Schnittpunkt mit der Winkelhalbierenden einen Abstand a vom Anfangspunkt der zugehörigen Schneidkante und im Bereich der Schneidecken mit stumpfem Winkel jeweils in ihrem Schnittpunkt mit der Winkelhalbierenden einen Abstand b vom Endpunkt der zugehörigen Schneidkante aufweist, wobei b größer als a ist, dass eine gedachte Verbindungsgerade dieser Schnittpunkte gegenüber der zugehörigen Schneidkante, wenn diese in einer Ebene senkrecht zur Auflagefläche geradlinig verläuft, oder gegenüber einer gedachten Verbindungsgeraden des Anfangs- und Endpunktes der zugehörigen Schneidkante, wenn diese in der Ebene senkrecht zur Auflagefläche kurvenförmig verläuft, eine maximale Winkelabweichung von 5° in dieser Ebene aufweist, wobei der Schnittpunkt mit der Winkelhalbierenden der Schneidecke mit spitzem Winkel gegenüber dem Anfangspunkt der Schneidkante in Bezug auf die Auflagefläche gleich hoch oder um bis zu maximal 6 % von der Länge der zugehörigen Schneidkante tiefer liegt.

Durch die erfindungsgemäße Ausgestaltung wird erreicht, dass sich die Verschneidungskurve der Spanleitstufe mit dem Mittelteil weitgehend an den jeweiligen Verlauf der Schneidkante anpasst, wodurch sich ein hervorragendes Spanbruchverhalten bei geringen Schnittkräften ergibt.

Besonders vorteilhaft dabei ist es auch, wenn, in Draufsicht gesehen, die Verschneidungskurve die gedachte Verbindungsgerade zwischen dem Schnittpunkt der Winkelhalbierenden in einer Schneidecke mit spitzem Winkel mit der Verschneidungskurve und dem Schnittpunkt der Winkelhalbierenden in einer Schneidecke mit stumpfem Winkel mit der Verschneidungskurve, in Richtung auf die zugehörige Schneidkante hin, an keiner Stelle um mehr als 10 % von der Länge der zugehörigen Schneidkante überschreitet. In der Regel wird es nur in den Bereichen der Schneidecken zu geringfügigen Überschreitungen kommen, da der Mittelteil im Bereich der Schneidecken nicht zu schmal und spitz zulaufend ausgeführt werden kann.

Weiters ist es von Vorteil, wenn die Schneidkanten mit Ausnahme der Schneidecken jeweils mit einer Fase versehen sind, welche in Bezug auf die Auflagefläche eine maximale Winkelabweichung von 10° und eine Breite zwischen 0,5 % und 3 % von der Länge der zugehörigen Schneidkante aufweist. Dadurch werden bei der Zerspanung geringe Schnittkräfte und ein guter Spanbruch, verbunden mit einer hohen Ausbruchsicherheit der Schneidkanten besonders beim Bohren und Ausdrehen von Bohrungen erreicht.

Besonders gute Zerspanungsergebnisse werden erreicht, wenn die Spanfläche in ihrem abfallenden Bereich einen Winkel von 10° bis 25° mit einer Parallelen zur Auflagefläche einschließt.

Diese Ausgestaltung trägt dazu bei, dass selbst bei hohen Vorschüben beim Bohren und Drehen die Schnittkräfte klein bleiben und ein guter Spanbruch erzielt wird, so dass eine hohe Maßhaltigkeit und gute Oberflächengüte der bearbeiteten Werkstücke erreicht wird.

Bei der Festlegung der Verschneidungskurve ist es von Vorteil, wenn ihr Abstand a im Bereich von 1 % bis 20 % und der Abstand b im Bereich von 10 % bis 40 % von der Länge der zugehörigen Schneidkante liegt.

Durch diese konstruktive Ausgestaltung wird erreicht, dass auch bei großen Spantiefen beim Drehen und Bohren ausreichend Platz für die Späne vorhanden ist.

Günstig ist es auch, wenn jeweils der Schnittpunkt der Winkelhalbierenden der Schneidecken mit stumpfem Winkel mit dem tiefsten Punkt der Spanfläche, einen Abstand c vom Endpunkt der zugehörigen Schneidkante aufweist, der im Bereich von 10 % bis 25 % von der Länge der zugehörigen Schneidkante liegt. Der Vorteil dieser Ausgestaltung liegt in einem weichen Schnitt und wiederum viel Platz für die erzeugten Späne.

Wenn die gedachte Verbindungsgerade, zwischen dem Schnittpunkt der Verschneidungskurve mit der Winkelhalbierenden der Schneidecke mit spitzem Winkel und dem Schnittpunkt der Winkelhalbierenden der Schneidecke mit stumpfem Winkel mit dem tiefsten Punkt der Spanfläche, gegenüber der zugehörigen Schneidkante, wenn diese in einer Ebene senkrecht zur Auflagefläche geradlinig verläuft, oder gegenüber einer gedachten Verbindungsgeraden zwischen dem Anfangs- und dem Endpunkt der zugehörigen Schneidkante, wenn diese in der Ebene senkrecht zur Auflagefläche kurvenförmig verläuft, eine maximale Winkelabweichung von 5° in dieser Ebene aufweist, treten ebenfalls geringe Spankräfte auf und es wird eine gute Spanverformung erreicht.

Wenn der Mittelteil einen zentralen, ebenen Mittelbereich aufweist, ergeben sich deutliche Verbesserungen bei der Herstellung der Wendeschneidplatte.

Wenn im Bereich der Schneidecke mit spitzem Winkel, in Richtung der Winkelhalbierenden anschließend an den Mittelteil ein oder mehrere noppenförmige Erhebungen angeordnet sind, wird ein gutes Spanbruchverhalten bei kleineren Spantiefen erreicht.

Besonders vorteilhaft ist es, wenn, in Draufsicht gesehen, die Verschneidungskurve entlang der Schneidkanten, vom Zentrum der Wendeschneidplatte zur jeweiligen Schneidkante hin gesehen, wellenförmig verläuft, mit einem Wellenberg im Bereich der Schneidkantenmitte und Wellentälern zu den Bereichen der Schneidecken hin.

Auch diese Maßnahme trägt zu einem verbesserten Spanbruchverhalten und größerer Stabilität der Wendeschneidplatte, verbunden mit einer guten Fertigbarkeit, bei.

Im Folgenden wird die Erfindung an Hand von Figuren näher erläutert.

Es zeigen:
- Figur 1: eine erfindungsgemäße Wendeschneidplatte in Seitenansicht
- Figur 2: die Wendeschneidplatte nach Fig. 1 in Draufsicht
- Figur 3: die Variante einer erfindungsgemäßen Wendeschneidplatte in Seitenansicht
- Figur 4: die Wendeschneidplatte nach Fig. 1 und Fig. 2 in Schrägansicht mit Oberflächenlinien
- Figur 5: eine weitere Variante einer erfindungsgemäßen Wendeschneidplatte in Draufsicht
- Figur 6: eine dritte Variante einer erfindungsgemäßen Wendeschneidplatte in Draufsicht

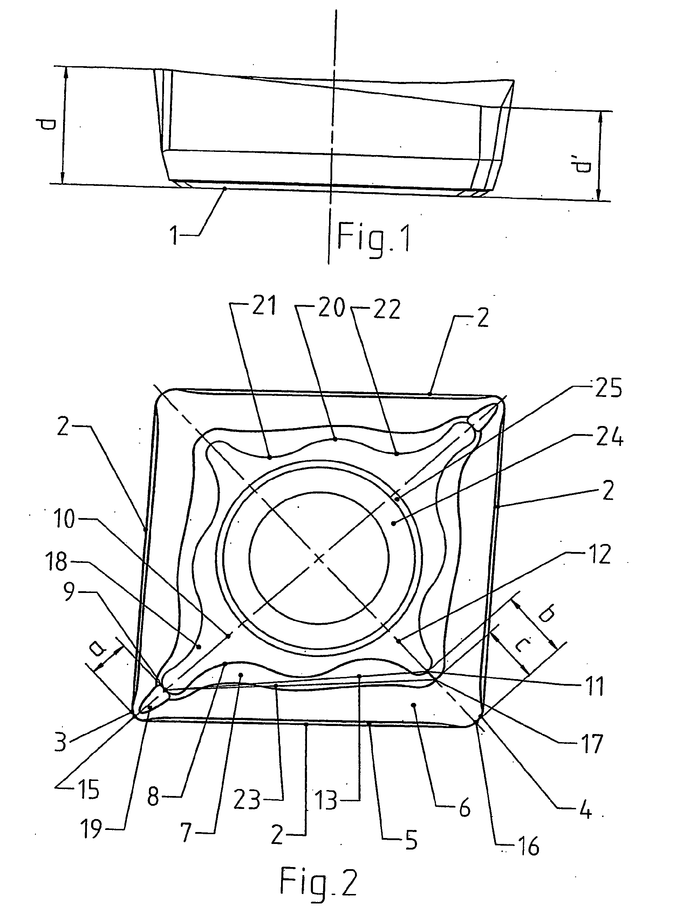

In den Figuren 1, 2 und 4 ist eine erfindungsgemäße, rhombusförmige Wendeschneidplatte mit vier gleich langen, im Wesentlichen geraden Schneidkanten -2- und einer ebenen Auflagefläche -1- dargestellt. Die Schneidkanten -2- gehen in den Ecken der Wendeschneidplatte, in zwei gegenüber liegende, kreisbogenförmige Schneidecken -3- mit spitzen Eckenwinkeln von jeweils 88° und in zwei gegenüber liegende kreisbogenförmige Schneidecken -4- mit jeweils stumpfen Eckenwinkeln von 92°, über. In den Schneidecken -3- mit spitzwinkelig zusammenlaufenden Schneidkanten -2- weist die Wendeschneidplatte ihre größte Dicke d auf, während sie in den Schneidecken -4- mit stumpfwinkelig zusammenlaufenden Schneidkanten -2- eine geringere Dicke d' aufweist. Die Schneidkanten -2- verlaufen in einer Ebene senkrecht zur Auflagefläche -1- außerhalb der Schneidecken -3-, -4- entsprechend als schräg abfallende Gerade.

Die Schneidkanten -2- sind außerhalb der Schneidecken -3-, -4- mit Fasen -5- versehen, welche in Bezug auf die Auflagefläche -1- mit einem Winkel von 5° abfallend geneigt verlaufen. Anschließend an die Schneidecken -3-, -4- und an die Fasen -5- weist die Wendeschneidplatte eine in Bezug auf die Auflagefläche -1- zuerst abfallende und dann mit einem Rückenbereich -7- ansteigende Spanfläche -6- auf. Der ansteigende Rückenbereich -7- der Spanfläche -6- bildet mit einem Mittelteil -18- der Wendeschneidplatte eine Verschneidungskurve -8-. Diese Verschneidungskurve -8- verläuft derart, dass sie in den jeweiligen Bereichen der Schneidecken -3- im Schnittpunkt -9- mit der zugehörigen Winkelhalbierenden -10- jeweils einen Abstand a vom Anfangspunkt -15- der zugehörigen Schneidkante -2- aufweist. In den jeweiligen Bereichen der Schneidecken -4- im Schnittpunkt -11- mit der zugehörigen Winkelhalbierenden -12- weist die Verschneidungskurve -8- vom Endpunkt -16- der zugehörigen Schneidkante -4- jeweils einen Abstand b auf, der größer als der Abstand a ist. Wenn man jeweils die benachbarten Schnittpunkte -9- und -11- mit einer gedachten Geraden -13- verbindet, dürfen diese Geraden -13- gegenüber der jeweils zugehörigen Schneidkante -2- in einer Ebene senkrecht zur Auflagefläche -1- eine maximale Winkelabweichung von 5° aufweisen.

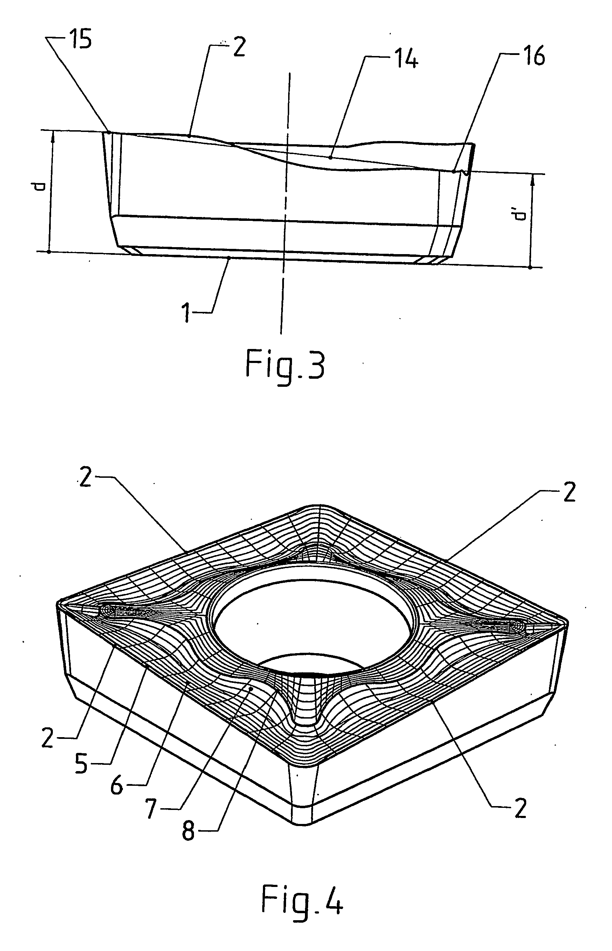

Im Falle von Schneidkanten -2-, die in der Ebene senkrecht zur Auflagefläche -1- kurvenförmig verlaufen, wie es in Figur 3 dargestellt ist, wird die maximal zulässige Winkelabweichung der Geraden -13- jeweils gegenüber einer gedachten Verbindungsgeraden -14- festgelegt, welche den Anfangspunkt -15- und den Endpunkt -16- der jeweiligen Schneidkante -2- verbindet. Die jeweiligen Schnittpunkte -9- liegen gegenüber den zugehörigen Anfangspunkten -15- der Schneidkanten -2- entweder auf gleicher Höhe oder um bis zu maximal 6 % von der Länge der Schneidkante -2- tiefer. Im jeweiligen Bereich der Schneidecke -4- weist der Schnittpunkt -17-, zwischen der Winkelhalbierenden -12- und dem tiefsten Punkt der Spanfläche, einen Abstand c vom Endpunkt -16- der zugehörigen Schneidkante -2- auf, der im Bereich von 10 % bis 25 % von der Länge der zugehörigen Schneidkante -2- liegen muss. Die Wendeschneidplatte weist ein Mittelloch -24- auf, das zum Mittelbereich -18- hin konisch ausläuft. Der Mittelbereich -18- selbst verläuft von der Verschneidungskurve -8- weg, zum Mittelloch -24- hin, leicht ansteigend und mündet in eine konzentrisch zum konischen Bereich der Mittelloches -4- verlaufende ebene Bundfläche -25-, welche parallel zur Auflagefläche -1- verläuft. Vom Mittelloch -24- zur jeweiligen Schneidkante -2- hin gesehen, verläuft die Verschneidungskurve -8-entlang der jeweiligen Schneidkante -2- wellenförmig, wobei im Bereich der Schneidkantenmitte ein Wellenberg -20- und zu den Bereichen der Schneidecken -3- und -4- hin, Wellentäler -21- und -22- vorgesehen sind. In den Bereichen der Schneidecken -3- ist unmittelbar anschließend an den Mittelbereich -18- jeweils eine noppenförmige Erhebung -19- angeordnet, die bis unmittelbar an die jeweilige kreisförmige Schneidecke -3- heranreicht.

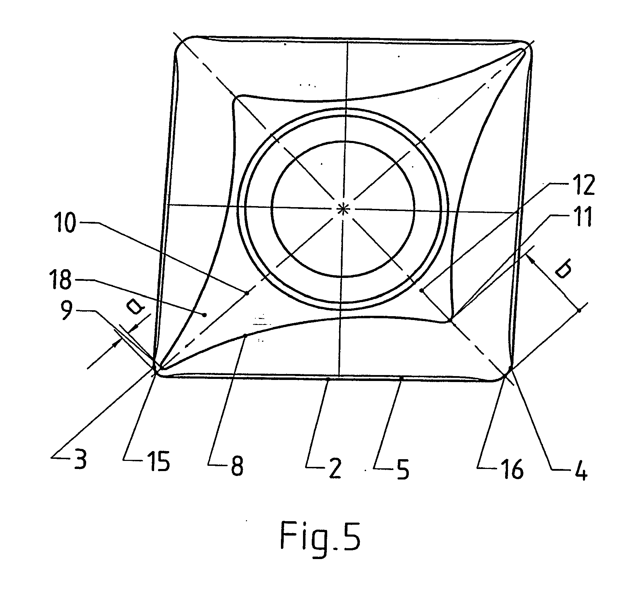

In Figur 5 ist die Variante einer erfindungsgemäßen rhombusförmigen Wendeschneidplatte dargestellt, bei welcher die Verschneidungskurve -8- in Bezug auf die zugehörige Schneidkante -2- nicht wellenförmig, sondern kontinuierlich gekrümmt verläuft. Darüber hinaus ist im Bereich der Schneidecke -3- keine erhabene Noppe -19- vorgesehen, sondern dort reicht der Mittelbereich -18- selbst bis unmittelbar an die kreisförmige Schneidecke -3- heran.

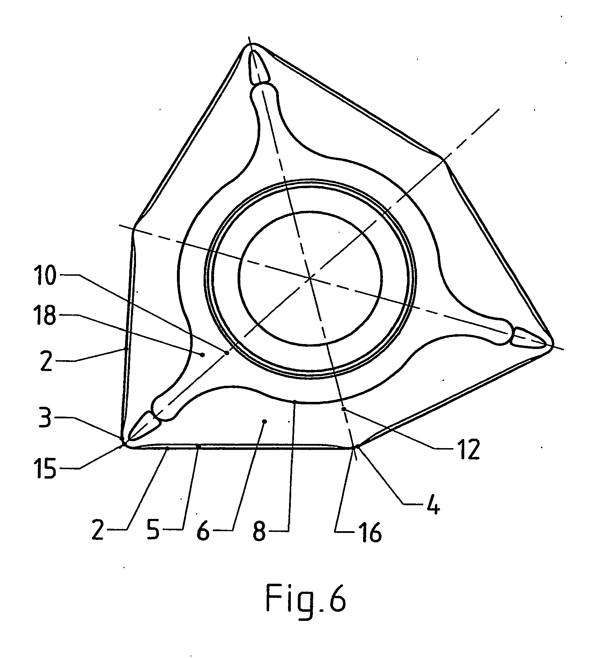

In Figur 6 ist die Variante einer erfindungsgemäßen Wendeschneidplatte in sechseckiger Grundform dargestellt, bei welcher die Verschneidungskurve -8- in Bezug auf die zugehörige Schneidkante -2- wieder wellenförmig verläuft, aber derart, dass zum Bereich der jeweiligen Schneidecke -3- hin ein Wellental vorliegt, während bei der jeweiligen Schneidecke -4- der höchste Punkt eines Wellenberges vorliegt.

## Patentansprüche

1. Polygonale Wendeschneidplatte mit einer ebenen Auflagefläche (1) und Schneidkanten (2) an der Oberseite, welche durch zwei oder mehr Schneidecken (3,4) mit aufeinander folgend abwechselnd spitzen und stumpfen Eckenwinkeln von weniger als 89° bzw, mehr als 91° miteinander verbunden sind, wobei die Schneidkanten (2) gegenüber der ebenen Auflagefläche (1) derart geradlinig oder kurvenförmig verlaufen, dass die Dicke d der Wendeschneidplatte in den Schneidecken (3) mit spitzem Winkel größer ist als die Dicke d' in den Schneidecken (4) mit stumpfem Winkel,
**dadurch gekennzeichnet,**
**dass**, in Draufsicht gesehen die Schneidkanten (2) in eine in Bezug auf die Auflagefläche (1) zuerst abfallende und in weiterem Verlauf mit einem Rückenbereich (7) ansteigende Spanfläche (6) übergehen, welche dann mit einem Mittelteil (18) der Wendeschneidplatte eine Verschneidungskurve (8) bildet, welche derart verläuft, dass sie im Bereich der Schneidecken (3) jeweils in ihrem Schnittpunkt (9) mit der Winkelhalbierenden (10) einen Abstand a vom Anfangspunkt (15) der zugehörigen Schneidkante (2) und im Bereich der Schneidecken (4) jeweils in ihrem Schnittpunkt (11) mit der Winkelhalbierenden (12) einen Abstand b vom Endpunkt (16) der zugehörigen Schneidkante (2) aufweist, wobei b größer als a ist, dass eine gedachte Verbindungsgerade (13) dieser Schnittpunkte (9,11) gegenüber der zugehörigen Schneidkante (2), wenn diese in einer Ebene senkrecht zur Auflagefläche (1) geradlinig verläuft, oder gegenüber einer gedachten Verbindungsgeraden (14) des Anfangs- (15) und Endpunktes (16) der zugehörigen Schneidkante (2), wenn diese in der Ebene senkrecht zur Auflagefläche (1) kurvenförmig verläuft, eine maximale Winkelabweichung von 5°, in dieser Ebene aufweist, wobei der Schnittpunkt (9) gegenüber dem Anfangspunkt (15) der Schneidkante (2) in Bezug auf die Auflagefläche (1) gleich hoch oder um bis zu maximal 6 % von der Länge der zugehörigen Schneidkante (2) tiefer liegt.

2. Wendeschneidplatte nach Anspruch 1, **dadurch gekennzeichnet, dass**, in Draufsicht gesehen, die Verschneidungskurve (8) die gedachte Verbindungsgerade (13) in Richtung auf die zugehörige Schneidkante (2) hin, an keiner Stelle um mehr als 10 % von der Länge der zugehörigen Schneidkante (2) überschreitet.

3. Wendeschneidplatte nach Anspruch 1 oder 2, **dadurch gekennzeichnet, dass** die Schneidkanten (2) mit Ausnahme der Schneidecken (3,4) jeweils mit einer Fase (5) versehen sind, welche in Bezug auf die Auflagefläche (1) eine maximale Winkelabweichung von 10° und eine Breite zwischen 0,5 % und 3 %von der Länge der zugehörigen Schneidkante (2) aufweist.

4. Wendeschneidplatte nach einem der Ansprüche 1 bis 3, **dadurch gekennzeichnet, dass** die Spanfläche (6) in ihrem abfallenden Bereich einen Winkel von 10° - 25° mit einer Parallelen zur Auflagefläche (1) einschließt.

5. Wendeschneidplatte nach einem der Ansprüche 1 bis 4, **dadurch gekennzeichnet, dass** der Abstand a im Bereich von 1 % bis 20 % und der Abstand b im Bereich von 10 % bis 40 % von der Länge der zugehörigen Schneidkante (2) liegt.

6. Wendeschneidplatte nach einem der Ansprüche 1 bis 5, **dadurch gekennzeichnet, dass** der Schnittpunkt (17) der Winkelhalbierenden (12) im Bereich der Schneidecken (4) mit dem tiefsten Punkt der Spanfläche (6), jeweils einen Abstand c vom Endpunkt (16) der zugehörigen Schneidkante (2) aufweist, der im Bereich von 10 % bis 25 % von der Länge der zugehörigen Schneidkante (2) liegt.

7. Wendeschneidplatte nach Anspruch 6, **dadurch gekennzeichnet, dass** eine gedachte Verbindungsgerade (23) zwischen dem Schnittpunkt (9) und dem Schnittpunkt (17) gegenüber der zugehörigen Schneidkante (2), wenn diese in einer Ebene senkrecht zur Auflagefläche (1) geradlinig verläuft, oder gegenüber einer gedachten Verbindungsgeraden (14) zwischen dem Anfangspunkt (15) und dem Endpunkt (16) der zugehörigen Schneidkante (2), wenn diese in der Ebene senkrecht zur Auflagefläche (1) kurvenförmig verläuft, eine maximale Winkelabweichung von 5°, in dieser Ebene aufweist.

8. Wendeschneidplatte nach einem der Ansprüche 1 bis 7, **dadurch gekennzeichnet, dass** der Mittelteil (18) einen zentralen, ebenen Mittelbereich aufweist.

9. Wendeschneidplatte nach einem der Ansprüche 1 bis 8, **dadurch gekennzeichnet, dass** im Bereich der Schneidecken (3) in Richtung der Winkelhalbierenden (10), anschließend an den Mitteilteil (18), ein oder mehrere noppenförmige Erhebungen (19) angeordnet sind.

10. Wendeschneidplatte nach einem der Ansprüche 1 bis 9, **dadurch gekennzeichnet, dass**, in Draufsicht gesehen, die Verschneidungskurve (8) entlang der Schneidkanten (2), vom Zentrum der Wendeschneidplatte zur jeweiligen Schneidkante (2) hin gesehen, wellenförmig verläuft, mit einem Wellenberg (20) im Bereich der Schneidkantenmitte und Wellentälern (21,22) zu den Bereichen der Schneidecken (3,4) hin.

## Claims

1. Polygonal indexable insert having a flat locating surface (1) and cutting edges (2) on the top side which are connected to one another by two or more cutting corners (3, 4) having acute and obtuse angles, following one another alternately, of less than 89° and respectively more than 91°, the cutting edges (2) running rectilinearly or in a curved manner relative to the flat locating surface (1) in such a way that the thickness d of the indexable insert at the cutting corners (3) having an acute angle is greater than the thickness d' at the cutting corners (4) having an obtuse angle, **characterized in that**, as seen in plan view, the cutting edges (2) merge into a rake face (6) which, with respect to the locating surface (1), first of all falls and in continuation rises with a back region (7) and which then forms together with a centre part (18) of the indexable insert an intersection curve (8) which runs in such a way that it is at a distance a from the starting point (15) of the associated cutting edge (2) in the region of the cutting corners (3) in each case at their intersection (9) with the angle bisector (10) and at a distance b from the end point (16) of the associated cutting edge (2) in the region of the cutting corners (4) in each case at their intersection (11) with the angle bisector (12), b being greater than a, **in that** an imaginary straight connecting line (13) of these intersections (9, 11), if the associated cutting edge (2) runs rectilinearly in a plane perpendicular to the locating surface (1), has a maximum angular deviation of 5° from said cutting edge (2) in this plane or, if the associated cutting edge (2) runs in a curved manner in the plane perpendicular to the locating surface (1), has a maximum angular deviation of 5° from an imaginary straight connecting line (14) of the starting point (15) and the end point (16) of said cutting edge (2) in this plane, wherein the intersection (9), with respect to the locating surface (1), lies at the same height as the starting point (15) of the cutting edge (2) or lies deeper than said starting point (15) by up to a maximum of 6% of the length of the associated cutting edge (2).

2. Indexable insert according to Claim 1, **characterized in that**, as seen in plan view, the intersection curve (8) does not overlap the imaginary straight connecting line (13) in the direction of the associated cutting edge (2) at any point by more than 10% of the length of the associated cutting edge (2).

3. Indexable insert according to Claim 1 or 2, **characterized in that** the cutting edges (2), with the exception of the cutting corners (3, 4), are each provided with a bevel (5) which has a maximum angular deviation of 10° with respect to the locating surface (1) and a width of between 0.5% and 3% of the length of the associated cutting edge (2).

4. Indexable insert according to one of Claims 1 to 3, **characterized in that** the rake face (6) encloses in its falling region an angle of 10°-25° with a line parallel to the locating surface (1).

5. Indexable insert according to one of Claims 1 to 4, **characterized in that** the distance a is within the range of 1% to 20% and the distance b is within the range of 10% to 40% of the length of the associated cutting edge (2).

6. Indexable insert according to one of Claims 1 to 5, **characterized in that** the intersection (17) of the angle bisector (12) in the region of the cutting corners (4) with the deepest point of the rake face (6) is in each case at a distance c from the end point (16) of the associated cutting edge (2), which distance c is within the range of 10% to 25% of the length of the associated cutting edge (2).

7. Indexable inert according to Claim 6, **characterized in that** an imaginary straight connecting line (23) between the intersection (9) and the intersection (17), if the associated cutting edge (2) runs rectilinearly in a plane perpendicular to the locating surface (1), has a maximum angular deviation of 5° from said cutting edge (2) in this plane or, if the associated cutting edge (2) runs in a curved manner in the plane perpendicular to the locating surface (1), has a maximum angular deviation of 5° from an imaginary straight connecting line (14) between the starting point (15) and the end point (16) of said cutting edge (2) in this plane.

8. Indexable insert according to one of Claims 1 to 7, **characterized in that** the centre part (18) has a flat centre region.

9. Indexable insert according to one of Claims 1 to 8, **characterized in that** one or more knob-shaped prominences (19) are arranged adjacent to the centre part (18) in the region of the cutting corners (3) in the direction of the angle bisector (10).

10. Indexable insert according to one of Claims 1 to 9, **characterized in that**, as seen in plan view, the intersection curve (8) runs in a wavelike manner along the cutting edges (2), as viewed from the centre of the indexable insert towards the respective cutting edge (2), with a wave crest (20) in the region of the centre of the cutting edge and wave troughs (21, 22) towards the regions of the cutting corners (3, 4).

## Revendications

1. Plaquette amovible polygonale dotée d'une surface d'appui plane (1) et d'arêtes de coupe (2) sur la face supérieure, qui sont reliées les unes aux autres par deux ou plus de deux coins de coupe (3, 4), qui se suivent et sont alternativement aigus et obtus avec des angles de coin, de moins de 89 degrés et/ou de plus de 91 degrés, les arêtes de coupe (2) étant disposées par rapport à la surface d'appui plane (1), en forme de ligne droite ou en forme de coude, de sorte que l'épaisseur *d* de la plaquette amovible dans les coins de coupe (3) présentant un angle aigu est supérieure à l'épaisseur *d*' dans les coins de coupe à angle obtus (4),
**caractérisée**
**en ce que**, en vue de dessus, les arêtes de coupe (2) font place à une surface de coupe (6) qui descend d'abord par rapport à la surface d'appui (1) et grimpe par la suite avec une zone arrière (7), laquelle surface forme alors avec une partie centrale (18) de la plaquette amovible une courbe d'intersection (8), qui est agencée de telle sorte qu'elle présente dans la zone des coins de coupe (3) à chaque fois en son point d'intersection (9) avec la bissectrice d'angle (10) une distance *a* par rapport au point initial (15) de l'arête de coupe particulière (2) et dans la zone des coins de coupe (4) à chaque fois en son point d'intersection (11) avec la bissectrice d'angle (12) une distance *b* par rapport au point d'extrémité (16) de l'arête de coupe particulière (2), *b* étant supérieur à *a*,
et **en ce qu'**une droite imaginaire (13) de liaison entre ces points d'intersection (9, 11) présente par rapport à l'arête de coupe particulière (2), lorsque celle-ci est en ligne droite dans un plan perpendiculairement à la surface d'appui (1), ou par rapport à une droite imaginaire (14) de liaison du point de départ (15) et du point d'extrémité (16) de l'arête de coupe particulière (2), lorsque celle-ci s'étend dans le plan perpendiculairement à la surface d'appui (1) en forme de courbe, un écart d'angle au maximum de 5 degrés, dans ce plan, le point d'intersection (9) se situant vis-à-vis du point de départ (15) de l'arête de coupe (2) par rapport à la surface d'appui (1) à la même hauteur ou à un niveau inférieur représentant au maximum 6 % de la longueur de l'arête de coupe particulière (2).

2. Plaquette amovible selon la revendication 1, **caractérisée en ce que**, en vue de dessus, la courbe d'intersection (8) ne dépasse en aucun endroit de la droite de liaison imaginaire (13) en direction de l'arête de coupe particulière (2) de plus de 10 % de la longueur de l'arête de coupe particulière (2).

3. Plaquette amovible selon la revendication 1 ou 2, **caractérisée en ce que** les arêtes de coupe (2), à l'exception des arêtes de coupe (3, 4), sont dotées chacune d'un chanfrein (5), qui présente par rapport à la surface d'appui (1) un écart d'angle au maximum de 10 degrés et une largeur représentant entre 0,5 % et 3 % de la longueur de l'arête de coupe particulière (2).

4. Plaquette amovible selon l'une des revendications 1 à 3, **caractérisée en ce que** la surface de coupe (6) forme dans sa zone décroissante un angle de 10 degrés à 25 degrés avec une parallèle à la surface d'appui (1).

5. Plaquette amovible selon l'une des revendications 1 à 4, **caractérisée en ce que** la distance *a* représente entre 1 % et 20 % et la distance *b* entre 10 % et 40 % de la longueur de l'arête de coupe particulière (2).

6. Plaquette amovible selon l'une des revendications 1 à 5, **caractérisée en ce que** le point d'intersection (17) de la bissectrice d'angle (12) présente dans la zone des coins de coupe (4) avec le point le plus bas de la surface de coupe (6), à chaque fois une distance c par rapport au point d'extrémité (16) de l'arête de coupe particulière (2), qui représente entre 10 % et 25 % de la longueur de l'arête de coupe (2) particulière.

7. Plaquette amovible selon la revendication 6, **caractérisée en ce qu'**une droite de liaison imaginaire (23) entre le point d'intersection (9) et le point d'intersection (17) par rapport à l'arête de coupe particulière (2), lorsque celle-ci est en ligne droite dans un plan perpendiculairement à la surface d'appui (1), ou par rapport à une droite de liaison imaginaire (14) entre le point de départ (15) et le point d'extrémité (16) de l'arête de coupe particulière (2), lorsque celle-ci est agencée dans le plan perpendiculairement à la surface d'appui (1) en forme de courbe, présente un écart d'angle maximum de 5 degrés, dans ce plan.

8. Plaquette amovible selon l'une des revendications 1 à 7, **caractérisée en ce que** la partie centrale (18) présente une zone moyenne centrale et plane.

9. Plaquette amovible selon l'une des revendications 1 à 8, **caractérisée en ce qu'**une ou plusieurs élévations (19) en forme de bouton sont formées dans la zone des coins de coupe (3) en direction de la bissectrice d'angle (10), à la suite de la partie centrale (18).

10. Plaquette amovible selon l'une des revendications 1 à 9, **caractérisée en ce que**, en vue de dessus, la courbe d'intersection (8) s'étend en forme de vague le long des arêtes de coupe (2), vue depuis le centre de la plaquette amovible vers l'arête de coupe respective (2), avec un sommet de vague (20) dans la zone du centre d'arête de coupe et des creux de vague (21, 22) en direction des zones des coins de coupe (3, 4).
